# EUROPÄISCHE PATENTSCHRIFT

(11) **EP 3 088 472 B1**
(45) Veröffentlichungstag und Bekanntmachung des Hinweises auf die Patenterteilung: **23.09.2020**
(21) Anmeldenummer: 16167057.5
(22) Anmeldetag: 26.04.2016
(51) Int. Cl.: C08L 99/00, C08L 23/06, C08L 97/02, C08L 23/12, C08L 23/20, C08L 23/22, C08L 23/08, C08L 23/14, C08K 3/34, C08K 3/36, C08K 3/40, C08K 11/00, B44C 3/04, C08K 5/11, C08L 91/08

(54) **MODELLIERMASSE**
MODELLING COMPOUND
MASSE DE MODELAGE

(30) Priorität: 28.04.2015 DE 202015102128 U
(43) Veröffentlichungstag der Anmeldung: 02.11.2016
(73) Patentinhaber: Craze GmbH, 76133 Karlsruhe (DE)
(72) Erfinder: Aschenbrenner, Michael, 76137 Karlsruhe (DE); Lipp, Florian N., 63619 Bad Orb (DE)
(74) Vertreter: Christophersen Patentanwälte

(56) Entgegenhaltungen:
- EP-A1- 0 017 795
- DE-A1- 2 424 451
- DE-A1- 4 324 840
- DE-A1- 10 201 946

## Beschreibung

Die vorliegende Erfindung betrifft eine Modelliermasse, die feinteilige Feststoffe, ausgewählt sind aus SiO₂, Sand, Glas, Muschelschale, Pflanzenkernen und -schalen, ein Bindemittel, ausgewählt ist aus thermoplastischen Polyolefinen, wie Polyethylen, Polypropylen, Polyisopropylen, Polybutylen, Polyisobutylen, linearen und vernetzten Copolymeren, Pfropfcopolymeren, die Polyethylen, Polypropylen, Polyisopropylen, Polybutylen, Polyisobutylen enthalten, sowie Gemischen der voranstehenden und ggf. weitere Inhaltsstoffe enthält, und ein Verfahren zur Herstellung der Modelliermasse.

Aus dem Stand der Technik ist eine Vielzahl von Modelliermassen bekannt, die sowohl von Künstlern als auch von Kindern verwendet werden. Die meisten dieser Materialien erhalten durch leichtes Erwärmen die gewünschte Plastizität und Formbarkeit. In vielen Fällen reicht für die Energiezufuhr schon das Kneten des Materials mit der Hand.

Viele der bekannten Materialien sind frei formbar, sie erhalten ihre Form nach der Bearbeitung, beispielsweise durch Kneten mit der Hand. Sie sind in der Regel wiederverwendbar und können durch erneute Bearbeitung in eine andere Form überführt werden. Einige Materialien, wie z. B. Ton, werden nach der Formgebung erhitzt, d. h. gebrannt, wodurch die Form fixiert wird.

Aus der DE 102 01 946 A1 ist beispielsweise eine Modelliermasse, die aus Bindemittel auf Wachs- und Ölbasis aufgebaut ist, ein Füllstoff, der ein Leichtfüllstoff aus Mikrohohlkugeln ist, Farbmittel sowie gegebenenfalls weiteren Zusatzstoffen bekannt. Das Bindemittel besteht aus einem festen Wachs, einem pastösen Wachs und flüssigem Anteil auf Wachs- und/oder Ölbasis, wobei der Gehalt an Bindemittel zwischen 45 und 90 Gew.-% in der Knetmasse liegt.

Aus der DE 20 2005 021 514 U1 ist eine Modelliermasse bekannt, die den Anforderungen der EN 71 (1994, Safety of Toys) entsprechen soll und die 20 bis 90 Gew.-% eines Bindemittels, 10 bis 60 Gew.-% Wasser, mindestens einen Füllstoff und 0,5 bis 40 Gew.-% eines Zusatzstoffes enthält. Der Füllstoff ist ein Leichtfüllstoff mit einer Dichte von weniger als 1,0 g/cm³ bei 20 °C und liegt entweder partikelartig, span- oder blattartig oder als Mischung vor. Die Poren dieses Leichtfüllstoffes weisen einen mittleren Porendurchmesser von weniger als 800 µm auf und zeigen eine nicht glatte zerklüftete Oberfläche, wie sie beim Zerkleinern von porösen Stoffen durch Mahlen entsteht. Die Korngröße der Leichtfüllstoffe liegt in dem Bereich zwischen 2 und 800 µm nach der Siebanalyse von Mesh, die spanartigen Leichtfüllstoffe zeigen einen Durchmesser von 2 bis 800 µm und eine Länge von 1 bis 20 µm und die blattartigen Leichtfüllstoffe eine Dicke von 2 bis 800 µm und einen mittleren Durchmesser von 1 mm bis 20 mm. Beispiele für den Leichtfüllstoff sind Korkmehl, Korkschrot und/oder Korkgranulat sowie Mikroglas, Hohlkugeln, Zellulosefasern, Leicht-Kunststoffe, Perlite und Kaolin oder eine Mischung davon. Das Bindemittel basiert auf einer filmbildenden Polymer-Dispersion, die als Polymere Polyurethan, Zellulose-Derivate, Stärke-Derivate oder Vinylpolymere enthält. Ein Beispiel für Vinylpolymere ist Polyvinylchlorid.

In der europäischen Patentanmeldung 0 017 795 wird eine schwimmfähige Modelliermasse auf Basis von Wachsen, Farbpigmenten, Füllstoffen und gegebenenfalls Ölen offenbart, wobei der Füllstoff dazu dient, das spezifische Gewicht der Modelliermasse > 1 zu halten. Als Füllstoff werden Styroporkugeln, Korkmehl, Holzmehl, Polyurethanschaum oder anorganischer Schaum, wie Steinschäume auf Basis von Luparit bzw. Quarzporphyr verwendet. Als Bindemittel werden Vaseline, Weichwachs und PVC-Pulver eingesetzt.

Ein Nachteil der aus dem Stand der Technik bekannten Modelliermassen ist, dass diese Materialien eine gewisse Plastizität aufweisen, so dass Kinder diese nur schwer formen können. Auf der anderen Seite können Materialien mit geringerer Festigkeit die ihnen gegebene Gestalt nicht halten, sie werden üblicherweise in eine Form gegeben und in einem Nachbearbeitungsschritt gebrannt. Dieser Vorgang ist irreversibel, das Material ist nicht wiederverwendbar.

DE 43 24 840 A1 offenbart eine härtbare Modelliermasse, die zerkleinertes Faservlies, Kleister und Wasser umfasst und nach dem Erhärten bei erneuter Durchfeuchtung wieder modelliert werden kann. Als Faservlies können Materialien, die Polyesterfasern oder Polyethylenfasern enthalten, eingesetzt werden. Das Faservlies ist mit einem natürlichen oder synthetischen Latex gebunden.

DE 24 24 451 A1 offenbart eine weitere plastische Masse für Modellierzwecke, welche Füllstoffe, Bindemittel, Weichmacher sowie gegebenenfalls weitere Zusätze enthält. Der Füllstoff besteht aus silikatischem Material, wie Talkum, Kaolin oder dergleichen, aus oxidischem Material, wie Zink-, Magnesium-, Aluminium-Oxid oder dergleichen, oder organisch-synthetischem Material, wie Kunststoffpulver oder dergleichen. Das Bindemittel besteht aus mindestens einem Wachs aus der Gruppe der Polyethylenwachse mit einem Molekulargewicht von 1500 bis 5500 oder der Paraffine, aus einem mikrokristallinen Wachs oder hochmolekularen Alkoholen oder Kunstharz oder Kunstharzderivaten oder natürlichem Harz, wie Kolophonium oder wachsartigen Erdöldestillaten.

EP 0 017 795 offenbart eine schwimmfähige Modelliermasse auf Basis von Wachsen, Farbpigmenten, Füllstoffen und gegebenenfalls Ölen, wobei als Füllstoff allein oder zusätzlich ein Material dient, mit dessen Hilfe das spezifische Gewicht der Modelliermasse > 1 gehalten wird. Als Füllstoffe werden Styroporkügelchen, Korkmehl, Holzmehl, Polyurethanschaum oder ein anorganischer Schaum verwendet.

Eine weitere Modelliermasse wird in DE 102 01 946 A1 offenbart, die eine typische Knetmasse darstellt und beliebig umformbar ist. Diese Modelliermasse besteht aus Bindemittel, Füllstoff, Farbmittel sowie gegebenenfalls weiteren Zusatzstoffen, wobei das Bindemittel auf Wachs- oder Ölbasis aufgebaut ist. Als Füllstoffe werden im Wesentlichen sogenannte Leichtfüllstoffe eingesetzt, dabei handelt es sich um Mikrohohlkugeln aus Glas oder wasserbeständigen Kunststoffen.

Aus der US 7,862,894 B1 ist eine Materialzusammensetzung bekannt, die als "Air Clay" bezeichnet wird und die sowohl als Modelliermasse für Kinder als auch für andere Zwecke geeignet ist und die mit einem Bindemittel beschichtetes partikuläres oder granuläres Material enthält. Als Bindemittel wird ein Polymer mit endständigen Hydroxylgruppen eingesetzt, die mit einer Borverbindung vernetzt sind. Das partikuläre oder granuläre Material ist in einem Anteil von etwa 90 bis 98 Vol.-%, bezogen auf die fertige Zusammensetzung, enthalten. Das Bindemittel weist eine gewisse Klebrigkeit auf, so dass das partikuläre Material über das Bindemittel aneinander haftet. Diese bekannte Materialzusammensetzung weist den Nachteil auf, dass das Bindemittel eine Borverbindung enthält, die als Vernetzungsmittel Bestandteil des Polymergerüsts ist. Bor ist in gewissen Mengen toxisch und gerade in Materialien, die als Kinderspielzeug eingesetzt werden, unerwünscht.

Der vorliegenden Erfindung lag demgemäß die **Aufgabe** zugrunde, eine Modelliermasse zur Verfügung zu stellen, die durch Kneten in eine eigenstabile Form überführt werden kann, die wiederverwendbar ist und auch von Kindern verwendet werden kann.

Gegenstand der vorliegenden Erfindung ist eine Modelliermasse der eingangs genannten Art, welche
- 80 bis 98 Gew.-% feinteilige Feststoffe,
- 2 bis 20 Gew.-% Bindemittel
   und ggf.
- 1 bis 3 Gew.-% Weichmacher,
- 1 bis 3 Gew.-% Plastifizierhilfsmittel,
- 0,1 bis 1 Gew.-% Pigmente
enthält, mit der Maßgabe, dass sich die Summe der einzelnen Bestandteile auf 100 % addiert.

Die erfindungsgemäße Zusammensetzung bildet eine Modelliermasse, die durch Kneten in eine eigenstabile Form überführt werden kann, welche zerfällt, wenn die Außenkontur verletzt wird. Die einzelnen Partikel der Masse agglomerieren aufgrund von Adhäsionskräften zu größeren Einheiten. Die Masse liegt in Form einer pappig-anhaftenden Masse vor.

Die erfindungsgemäße Modelliermasse enthält im Wesentlichen feinteilige Feststoffe, die ganz oder zumindest teilweise vom Bindemittel umgeben sind. Das Bindemittel weist eine solche Klebkraft (Adhäsionswirkung) auf, dass die von Bindemittel umgebenen Feststoffpartikel bei der mechanischen Bearbeitung, beispielsweise beim manuellen Kneten, aneinanderhaften und durch die Bearbeitung ein dreidimensionaler Körper erhalten wird. Es ist eine Oberflächenbindung, die überwiegend zu ihresgleichen eingegangen wird, nicht aber gegenüber fremden Flächen oder Substraten. Dieser in sich stabile Körper weist eine Oberfläche ohne Porenverbindung nach innen auf. Bei Verletzung dieser geschlossenen Außenkontur entsteht eine Verbindung der Poren nach außen verbunden mit einem Aufreißen, das sich über den gesamten Körper fortsetzt. Die Eigenstabilität des Körpers geht verloren, er zerfällt.

Die feinteiligen Feststoffe sind erfindungsgemäß ausgewählt aus SiO₂, Sand, Glas, Muschelschale, Pflanzenkernen und -schalen und beliebigen Gemischen der voranstehenden. Die Teilchengröße sollte so gewählt werden, dass die einzelnen Partikel einerseits so klein sind, dass die Partikel beim Kneten mit der Hand nicht als einzelne Partikel wahrgenommen werden, und sollte andererseits so groß sein, dass die Partikel nicht inhaliert werden können. Vorzugsweise liegt die Teilchengröße zwischen 0,001 und 2 mm, insbesondere zwischen 0,01 und 1 mm und besonders bevorzugt zwischen 0,02 und 0,7 mm. Die feinteiligen Feststoffe sind in einer Menge von 80 bis 98 Gew-%, vorzugsweise in einer Menge von 90 bis 96 Gew.-%, in der fertigen Zusammensetzung enthalten.

Die feinteiligen Feststoffe können eine beliebige Form aufweisen, so können sie als polygonale Teilchen, Teilchen mit glatter Oberfläche oder kugelförmige Teilchen, z. B. in Form von Perlen oder Kugeln, vorliegen, es können auch Mischungen aus unterschiedlichen Formen eingesetzt werden.

In einer bevorzugten Ausführungsform werden Mischungen aus Glasperlen oder Mikroglashohlkugeln, also Partikeln mit einer glatten Oberfläche, und polygonalen SiO₂-haltigen Partikeln, eingesetzt. Die Glasperlen können kugelförmig oder nahezu kugelförmig sein. Die polygonalen SiO₂-haltigen Partikel können natürlicher oder synthetischer Sand sein, der eine geeignete Teilchengröße aufweist. In einer besonders bevorzugten Ausführungsform sind die feinteiligen Feststoffe ein Gemisch aus polygonalen Sandkörnern und Glasperlen, die in einem Verhältnis von 4 : 6 bis 6 : 4, bezogen auf das Gemisch aus Sandkörnern und Glasperlen, vorliegen.

Erfindungsgemäß einsetzbare Bindemittel sind vorzugsweise ausgewählt aus solchen, die bei Raumtemperatur und leichtem Druck eine gewisse Klebrigkeit aufweisen. Geeignete Bindemittel sind thermoplastische Polymere, die reversibel geschmolzen werden können, insbesondere Polyolefine, wie Polyethylen, Polypropylen, Polyisopropylen, Polybutylen, Polyisobutylen, lineare und vernetzte Copolymere, Pfropfcopolymere, die Polyethylen, Polypropylen, Polyisopropylen, Polybutylen, Polyisobutylen enthalten, sowie Gemische der voranstehenden.

Die Bindemittel sind in einer Menge von 2 bis 20 Gew.-%, vorzugsweise von 2 bis 10 Gew.-% und insbesondere von 2 bis 5 Gew.-%, in der fertigen Zusammensetzung enthalten.

Die erfindungsgemäße Modelliermasse kann weitere Inhaltsstoffe enthalten, wie beispielsweise Weichmacher, Plastifizierhilfsmittel, Pigmente und Farbstoffe, Antioxidantien, UV-Stabilisatoren, Feuchthaltemittel usw. Diese weiteren Inhaltsstoffe sind in der erfindungsgemäßen Modelliermasse insgesamt üblicherweise in einer Menge bis zu 7 Gew.-%, vorzugsweise in einer Menge von 2 bis 6 Gew.-%, enthalten.

Als Weichmacher können in der erfindungsgemäßen Modelliermasse dem Fachmann bekannte für die verwendeten Bindemittel geeignete Verbindungen eingesetzt werden, beispielsweise Acetylcitrate, wie Tributylacetylcitrat. Die Weichmacher sind einer Menge von 1 bis 3 Gew.-% und insbesondere in einer Menge von 1 bis 2,5 Gew.-%, in der fertigen Zusammensetzung enthalten.

Plastifizierhilfsmittel dienen dazu, die mechanische Bearbeitbarkeit zu verbessern. Als geeignete Plastifizierhilfsmittel können natürliche und synthetische Wachse, wie Bienenwachs und Paraffinwachse genannt werden. Die Plastifizierhilfsmittel sind in einer Menge von 1 bis 3 Gew.-% und insbesondere in einer Menge von 1 bis 2 Gew.-%, in der fertigen Zusammensetzung enthalten.

Durch die Zugabe von Pigmenten oder Farbstoffen lässt sich das Aussehen der Zusammensetzung sowie der daraus geformten Körper einstellen. In einer möglichen Zusammensetzung werden thermochrome Pigmente oder Farbstoffe eingesetzt, d. h. solche Pigmente oder Farbstoffe, die bei Temperaturänderung ihre Farbe ändern. Die Menge an zugefügtem Pigment hängt von der Art des Pigments ab und davon, welche Farbintensität die fertige Masse aufweisen soll. Üblicherweise werden Pigmente in einer Menge von 0,1 bis 1 Gew.-% zugefügt.

Die Haltbarkeit und Stabilität insbesondere der Bindemittel lässt sich durch Zugabe von Antioxidantien, UV-Stabilisatoren, Feuchthaltemittel etc. verbessern.

Ein weiterer Gegenstand der vorliegenden Erfindung ist ein Verfahren zur Herstellung der Modelliermasse, in welchem das Bindemittel und die feinteiligen Feststoffe miteinander vermischt werden.

Zur Durchführung des Verfahrens wird das Bindemittel vorzugsweise aufgeschmolzen oder in einem geeigneten Lösungsmittel gelöst, anschließend werden die feinteiligen Feststoffe zugegeben. Das Vermischen sollte derart erfolgen, dass das Bindemittel und die feinteiligen Feststoffe möglichst gleichmäßig miteinander vermischt sind. Nach dem Vermischen lässt man das erhaltene Gemisch abkühlen bzw. ggf. vorhandenes Lösungsmittel wird entfernt. Die weiteren Inhaltsstoffe können zu einem beliebigen Zeitpunkt zugefügt werden. Plastifizierhilfsmittel und Weichmacher werden vorzugsweise vor Zugabe der feinteiligen Feststoffe zum Bindemittel gegeben oder mit den feinteiligen Feststoffen, Pigmente werden vorzugsweise erst zum Schluss zugefügt.

In einer bevorzugten Ausführungsform werden als Bindemittel thermoplastische Komponenten eingesetzt, die sich reversibel aufschmelzen lassen. In dieser Ausführungsform wird das Bindemittel zunächst auf eine Temperatur oberhalb des Schmelzpunktes erwärmt und unter Rühren werden die feinteiligen Feststoffe zugefügt.

Sofern Weichmacher und/oder Plastifizierhilfsmittel eingearbeitet werden, wird in einer weiteren bevorzugten Ausführungsform zunächst ein homogenes Gemisch aus Bindemittel und Weichmacher und/oder Plastifizierhilfsmittel oberhalb des Schmelzpunktes des Bindemittels hergestellt. Anschließend werden die feinteiligen Feststoffe zugefügt und ggf. Pigment.

### Beispiel

Poly(isobutylen) und Tributylacetylcitrat wurden vermischt und auf 180 °C erhitzt und über 80 Minuten bei dieser Temperatur gerührt, bis ein homogenes Gemisch erhalten ist. Die Wärmezufuhr wird beendet, es werden Paraffinwachse hinzugefügt. Das erhaltene Gemisch weist eine dickflüssige Konsistenz auf.

Anschließend wird das erhaltene Gemisch in einen für zähflüssige und feste Stoffe geeigneten Mischer überführt, die Feststoffe, SiO₂ und Glasperlen werden zugegeben und gerührt, bis die Masse homogen ist.

Schließlich wird Pigment zugegeben und gut mit der Zusammensetzung vermischt, bis die Farbe gleichmäßig ist und man lässt die erhaltene Masse auf Raumtemperatur abkühlen.

Die fertige Modelliermasse wird anschließend in handelsübliche Verpackungsgrößen konfektioniert. In der verkaufsfertigen Verpackung kann Modelliermasse in nur einer Farbe abgepackt sein. Es können auch Modelliermassen mehrerer unterschiedlicher Farben kombiniert werden. Die Modelliermasse liegt als Handelsware in Form einer pappig-anhaftenden, nicht-rieselnden Masse vor, die durch Kneten in eine eigenstabile Form überführt werden kann. Das Kneten kann manuell und ggf. auch mit Hilfe von geeigneten Geräten erfolgen.

## Patentansprüche

1. Modelliermasse enthaltend feinteilige Feststoffe, ein Bindemittel und ggf. weitere Inhaltsstoffe, wobei
- die feinteiligen Feststoffe eine Teilchengröße zwischen 0,001 und 2 mm aufweisen und ausgewählt sind aus SiO₂, Sand, Glas, Muschelschale, Pflanzenkernen und -schalen,
- das Bindemittel ausgewählt ist aus thermoplastischen Polyolefinen, wie Polyethylen, Polypropylen, Polyisopropylen, Polybutylen, Polyisobutylen, linearen und vernetzten Copolymeren, Pfropfcopolymeren, die Polyethylen, Polypropylen, Polyisopropylen, Polybutylen, Polyisobutylen enthalten, sowie Gemischen der voranstehenden
**dadurch gekennzeichnet, dass**
- 80 bis 98 Gew.-% feinteilige Feststoffe,
- 2 bis 20 Gew.-% Bindemittel
und ggf.
- 1 bis 3 Gew.-% Weichmacher,
- 1 bis 3 Gew.-% Plastifizierhilfsmittel,
- 0,1 bis 1 Gew.-% Pigmente
enthalten sind, mit der Maßgabe, dass sich die Summe der einzelnen Bestandteile auf 100 % addiert.

2. Modelliermasse nach Anspruch 1, **dadurch gekennzeichnet, dass** die feinteiligen Feststoffe eine Teilchengröße zwischen 0,01 und 1 mm und bevorzugt zwischen 0,02 und 0,7 mm aufweisen.

3. Modelliermasse nach Anspruch 1 oder 2, **dadurch gekennzeichnet, dass** die feinteiligen Feststoffe in einer Menge von 90 bis 96 Gew-% enthalten sind.

4. Modelliermasse nach einem der Ansprüche 1 bis 3, **dadurch gekennzeichnet, dass** die feinteiligen Feststoffe polygonale Teilchen, Teilchen mit glatter Oberfläche, kugelförmige Teilchen oder Mischungen aus unterschiedlichen Formen sind.

5. Modelliermasse nach einem der Ansprüche 1 bis 4, **dadurch gekennzeichnet, dass** die feinteiligen Feststoffe ein Gemisch sind aus polygonalen Partikeln und Glasperlen, die in einem Verhältnis von 4 : 6 bis 6 : 4, bezogen auf das Gemisch aus Partikeln und Glasperlen, vorliegen.

6. Modelliermasse nach einem der Ansprüche 1 bis 5, **dadurch gekennzeichnet, dass** das Bindemittel Polyisobutylen, Polyisobutylen, das mit Siliconkautschuk vernetzt ist, ein Pfropfcopolymer aus Polyisobutylen und Siliconkautschuk oder ein Gemisch aus Polyisobutylen mit einem vernetzten Siliconkautschuk ist.

7. Modelliermasse nach einem der Ansprüche 1 bis 6, **dadurch gekennzeichnet, dass** Bindemittel in einer Menge von 2 bis 10 Gew.-% enthalten ist.

8. Modelliermasse nach einem der Ansprüche 1 bis 7, **dadurch gekennzeichnet, dass** weitere Inhaltsstoffe ausgewählt aus Antioxidantien, UV-Stabilisatoren, Feuchthaltemitteln enthalten sind.

9. Verfahren zur Herstellung einer Modelliermasse enthaltend feinteilige Feststoffe, ein Bindemittel und gegebenenfalls weitere Inhaltsstoffe, wobei
- die feinteiligen Feststoffe eine Teilchengröße zwischen 0,001 und 2 mm aufweisen und ausgewählt sind aus SiO₂, Sand, Glas, Muschelschale, Pflanzenkernen und -schalen,
- das Bindemittel ausgewählt ist aus thermoplastischen Polyolefinen, wie Polyethylen, Polypropylen, Polyisopropylen, Polybutylen, Polyisobutylen, linearen und vernetzten Copolymeren, Pfropfcopolymeren, die Polyethylen, Polypropylen, Polyisopropylen, Polybutylen, Polyisobutylen enthalten, sowie Gemischen der voranstehenden und
- 80 bis 98 Gew.-% feinteilige Feststoffe,
- 2 bis 20 Gew.-% Bindemittel
und ggf.
- 1 bis 3 Gew.-% Weichmacher,
- 1 bis 3 Gew.-% Plastifizierhilfsmittel,
- 0,1 bis 1 Gew.-% Pigmente
enthalten sind, mit der Maßgabe, dass sich die Summe der einzelnen Bestandteile auf 100 % addiert, **dadurch gekennzeichnet, dass** das Bindemittel und die feinteiligen Feststoffe miteinander vermischt werden.

10. Verfahren nach Anspruch 9, **dadurch gekennzeichnet, dass** das Bindemittel ein thermoplastisches Polymer ist, das zunächst auf eine Temperatur oberhalb des Schmelzpunktes erwärmt wird und unter Rühren die feinteiligen Feststoffe zugefügt werden.

## Claims

1. Modelling compound containing finely divided solids, a binder and optionally further constituents, where
- the finely divided solids have a particle size in the range from 0.001 to 2 mm and are selected from among SiO₂, sand, glass, seashells, plant kernels and shells,
- the binder is selected from among thermoplastic polyolefins such as polyethylene, polypropylene, polyisopropylene, polybutylene, polyisobutylene, linear and crosslinked copolymers, graft copolymers containing polyethylene, polypropylene, polyisopropylene, polybutylene, polyisobutylene and also mixtures of the above,
**characterized in that**
- from 80 to 98% by weight of finely divided solids,
- from 2 to 20% by weight of binder and optionally
- from 1 to 3% by weight of plasticizer,
- from 1 to 3% by weight of plastification aids (Cl.1/line 19),
- from 0.1 to 1% by weight of pigments
are present, with the proviso that the sum of the individual constituents adds up to 100%.

2. Modelling compound according to Claim 1, **characterized in that** the finely divided solids have a particle size in the range from 0.01 to 1 mm and preferably from 0.02 to 0.7 mm.

3. Modelling compound according to Claim 1 or 2, **characterized in that** the finely divided solids are present in an amount of from 90 to 96% by weight.

4. Modelling compound according to any of Claims 1 to 3, **characterized in that** the finely divided solids are polygonal particles, particles having a smooth surface, spherical particles or mixtures of different shapes.

5. Modelling compound according to any of Claims 1 to 4, **characterized in that** the finely divided solids are a mixture of polygonal particles and glass beads which are present in a ratio of from 4:6 to 6:4, based on the mixture of particles and glass beads.

6. Modelling compound according to any of Claims 1 to 5, **characterized in that** the binder is polyisobutylene, polyisobutylene crosslinked with silicone rubber, a graft copolymer of polyisobutylene and silicone rubber or a mixture of polyisobutylene with a crosslinked silicone rubber.

7. Modelling compound according to any of Claims 1 to 6, **characterized in that** the binder is present in an amount of from 2 to 10% by weight.

8. Modelling compound according to any of Claims 1 to 7, **characterized in that** further constituents selected from among antioxidants, UV stabilizers, humectants are present.

9. Process for producing a modelling compound containing finely divided solids, a binder and optionally further constituents, where
- the finely divided solids have a particle size in the range from 0.001 to 2 mm and are selected from among SiO₂, sand, glass, seashells, plant kernels and shells,
- the binder is selected from among thermoplastic polyolefins such as polyethylene, polypropylene, polyisopropylene, polybutylene, polyisobutylene, linear and crosslinked copolymers, graft copolymers containing polyethylene, polypropylene, polyisopropylene, polybutylene, polyisobutylene and also mixtures of the above,
and
- from 80 to 98% by weight of finely divided solids,
- from 2 to 20% by weight of binder and optionally
- from 1 to 3% by weight of plasticizer,
- from 1 to 3% by weight of plastification aids (Cl.9/line 30),
- from 0.1 to 1% by weight of pigments
are present, with the proviso that the sum of the individual constituents adds up to 100%, **characterized in that** the binder and the finely divided solids are mixed with one another.

10. Process according to Claim 9, **characterized in that** the binder is a thermoplastic polymer which is firstly heated to a temperature above the melting point and the finely divided solids are added while stirring.

## Revendications

1. Masse de modelage contenant des solides finement divisés, un liant et éventuellement d'autres ingrédients,
- les solides finement divisés présentant une grosseur de particule comprise entre 0,001 et 2 mm et étant choisis parmi SiO₂, le sable, le verre, des coquillages, des noyaux et des coques de végétaux ,
- le liant étant choisi parmi des polyoléfines thermoplastiques, comme le polyéthylène, le polypropylène, le polyisopropylène, le polybutylène, le polyisobutylène, des copolymères linéaires et réticulés, des copolymères greffés, qui contiennent du polyéthylène, du polypropylène, du polyisopropylène, du polybutylène, du polyisobutylène, ainsi que des mélanges des composés précédents **caractérisée en ce que**
- 80 à 98 % en poids de solides finement divisés,
- 2 à 20 % en poids de liant
et éventuellement
- 1 à 3 % en poids de plastifiant,
- 1 à 3 % en poids d'auxiliaire de plastifiant,
- 0,1 à 1 % en poids de pigments
sont contenus, étant entendu que la somme des ingrédients individuels s'additionne jusqu'à 100 %.

2. Masse de modelage selon la revendication 1, **caractérisée en ce que** les solides finement divisés présentent une grosseur de particule comprise entre 0,01 et 1 mm et préférablement entre 0,02 et 0,7 mm.

3. Masse de modelage selon la revendication 1 ou 2, **caractérisée en ce que** les solides finement divisés sont contenus en une quantité de 90 à 96 % en poids.

4. Masse de modelage selon l'une quelconque des revendications 1 à 3, **caractérisée en ce que** les solides finement divisés sont des particules polygonales, des particules avec une surface plane, des particules sphériques ou des mélanges de formes différentes.

5. Masse de modelage selon l'une quelconque des revendications 1 à 4, **caractérisée en ce que** les solides finement divisés sont un mélange de particules polygonales et de perles de verre, qui sont présentes en un rapport de 4:6 à 6:4, par rapport au mélange de particules et de perles de verre.

6. Masse de modelage selon l'une quelconque des revendications 1 à 5, **caractérisée en ce que** le liant est un polyisobutylène, un polyisobutylène qui est réticulé avec un caoutchouc de silicone, un copolymère greffé composé de polyisobutylène et de caoutchouc de silicone ou un mélange de polyisobutylène avec un caoutchouc de silicone réticulé.

7. Masse de modelage selon l'une quelconque des revendications 1 à 6, **caractérisée en ce que** le liant est contenu en une quantité de 2 à 10 % en poids.

8. Masse de modelage selon l'une quelconque des revendications 1 à 7, **caractérisée en ce que** d'autres ingrédients choisis parmi des antioxydants, des stabilisants UV, des humectants sont contenus.

9. Procédé pour la préparation d'une masse de modelage contenant des solides finement divisés, un liant et éventuellement d'autres ingrédients,
- les solides finement divisés présentant une grosseur de particule comprise entre 0,001 et 2 mm et étant choisis parmi SiO₂, le sable, le verre, des coquillages, des noyaux et des coques de végétaux ,
- le liant étant choisi parmi des polyoléfines thermoplastiques, comme le polyéthylène, le polypropylène, le polyisopropylène, le polybutylène, le polyisobutylène, des copolymères linéaires et réticulés, des copolymères greffés, qui contiennent du polyéthylène, du polypropylène, du polyisopropylène, du polybutylène, du polyisobutylène, ainsi que des mélanges des composés précédents et
- 80 à 98 % en poids de solides finement divisés,
- 2 à 20 % en poids de liant
et éventuellement
- 1 à 3 % en poids de plastifiant,
- 1 à 3 % en poids d'auxiliaire de plastifiant,
- 0,1 à 1 % en poids de pigments
sont contenus, étant entendu que la somme des ingrédients individuels s'additionne jusqu'à 100 %, **caractérisé en ce que** le liant et les solides finement divisés sont mélangés l'un avec l'autre.

10. Procédé selon la revendication 9, **caractérisé en ce que** le liant est un polymère thermoplastique, qui est d'abord chauffé à une température au-dessus du point de fusion et les solides finement divisés sont ajoutés sous agitation.
